# EUROPEAN PATENT SPECIFICATION

(11) **EP 0 964 401 B1**
(45) Date of publication and mention of the grant of the patent: **19.05.2004**
(21) Application number: 99304202.7
(22) Date of filing: 28.05.1999
(51) Int. Cl.: G11B 23/50

(54) **Compact disc cleaner**
Reiniger für Compact - Disc
Dispositif de nettoyage de disque compact

(30) Priority: 09.06.1998 CN 21308911 U
(43) Date of publication of application: 15.12.1999
(73) Proprietor: Taiwan Bor Ying Corporation, Panchiao City, Taipei Hsien (TW)
(72) Inventor: Lu, Shih-Huang, Shu-Lin Town, Taipei Hsein 238 (TW)
(74) Representative: Carter, Stephen John

(56) References cited:
- EP-A- 0 206 589
- GB-A- 2 157 877
- GB-A- 2 189 923
- GB-A- 2 192 301
- GB-A- 2 319 885
- US-A- 4 783 870
- US-A- 5 584 089

## Description

### FIELD OF THE INVENTION

The present invention relates to a compact disc cleaning cleaner whose simple mechanism makes it possible to effectively clean compact discs in an easy and convenient way.

### DESCRIPTION OF THE PRIOR ART

As a result of the progress in industrial technologies and the promotion of living quality, people are spending more time on recreational activities. Therefore, there's an increasing demand for higher audio and video enjoyment. Audio and video compact discs soon gain general acceptance for their hi-fidelity effects. Now they have become very popular in household, restaurants, audio-video centers, etc.

Compact disc is a high quality technological product. Like all other products, it requires periodic or nonperiodic cleaning and maintenance to keep its qualities and performance as well as prolong its usable life.

With its unique laser grooves, a compact disc should be wiped in a straight line either from center to edge or just the opposite, i.e., the cleaning direction should be kept vertical with the circumference of the disc. If a compact disc is wiped along the circumferential direction, the grooves on its surface will be damaged. This will cause a serious impact to its performance, or even worse, put an end to its usability.

There are great number of compact disc cleaners available which meet the abovementioned cleaning requirements. The present invention, however, provides a different mechanism that can achieve a better cleaning effect.

Document EP-0 206 589-A discloses the preamble of claim 1.

### SUMMARY OF THE INVENTION

The features of the present invention includes a box base having a seat and a cover, on which a turntable is pivoted. Pivoted at the near end of the turntable is a cleaning device which includes a knob and a wheel body located on the exterior and the interior of the turntable. A cleaning element is attached underneath the wheel body. There are gear teeth on the wheel body' s external wall which match with the gear teeth inside the box base. At one end, the said cover is pivoted to the seat, within which a compact disc can be held for cleaning. When the user turns the knob on the cleaning device, the turntable will start revolving as well; in the meantime, the gear teeth inside the box base will start the wheel body of the cleaning device so that it will begin to rotate with the radius of the compact disc. In this way, the cleaning element attached to the wheel body can clean the compact disc efficiently.

### BRIEF DESCRIPTION OF THE DRAWINGS

Figure 1 is the top view of an embodiment of the present invention;
Figure 2 is the S-S sectional view of Fig. 1;
Figure 3 is a partial sectional view of another embodiment of the present invention;
Figure 4 is the top view of a third embodiment of the present invention; and
Figure 5 is the C-C sectional view of Fig. 4.

### DETAILED DESCRIPTION OF THE PREFERRED EMBODIMENT

As the drawings indicate, the present invention includes a box base D, a turntable 3 and a cleaning device 4. The box base having a cover 1 and a seat 2.

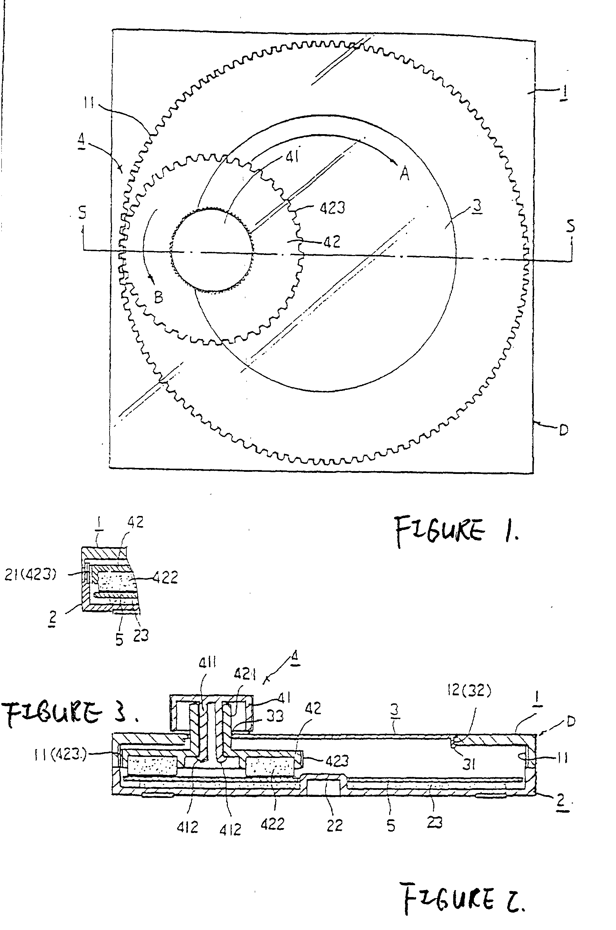

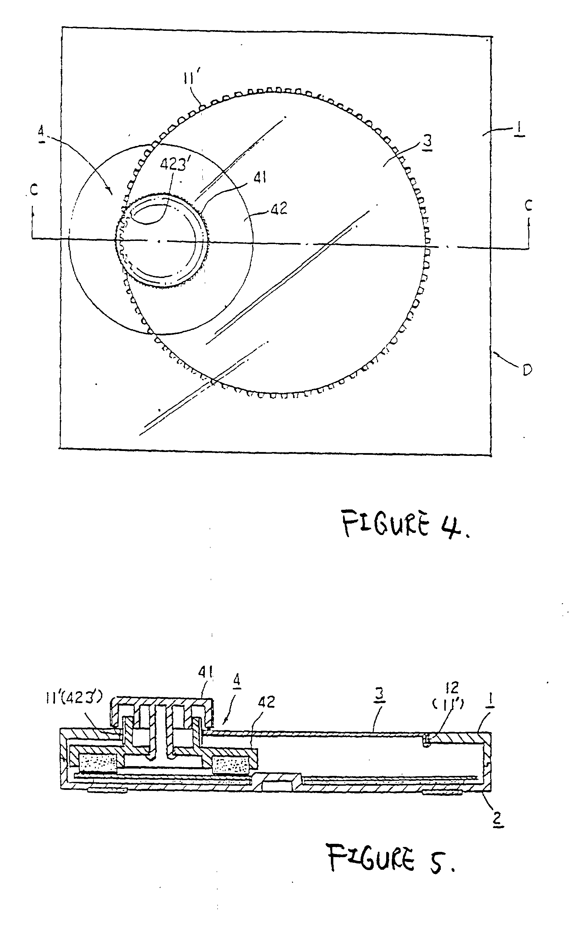

The aforementioned cover 1 and seat 2 are pivoted at one end, and thus the cover can be opened and closed. There are teeth on the internal wall of the box base, such as the internal gear 11, circling along the internal wall of the cover, as seen in Fig. 1 and Fig. 2, or the internal teeth 21, circling along the circumference inside the seat, as seen in Fig. 3. At the center inside the seat 2 is a boss 22 surrounded by a soft and unsmooth pad 23 on which a compact disc 5 is held.

The discus-like turntable 3 is pivoted to the edge 12 at the matching position on the cover 1. Spaced beneath the outer rim are several hooks 31 which form grooves 32 with the rim of the turntable. The turnable is able to wedge into the edge 12 on the cover 1 with its hooks 31 so that it can be revolved freely.

The said cleaning device 4 is pivoted at the near end of the turntable 3. It has a knob 41 and a wheel body 42 which are located on the exterior and the interior of the turntable 3. On the turntable there is a hole 33 with opening, and a pipe stem 411 is formed at the center of the knob 41. The pipe stem has a pair of vertical sluts (not shown is the drawings) and a pair of elastic hooks 412 at the bottom end, whereas the said wheel body 42 has an upward socket 421 at the center position. To assemble the cleaner, first the socket 421 of the wheel body 42 should go through the hole 33 on the turntable 3, and then the pipe stem 411 of the knob 41 should be pivoted into the socket 421 of the wheel body 42 until the hooks 412 and the bottom end of the socket are so hooked that the wheel body is rotatable in the turntable. A cleaning element 422, e.g., deerskin, is attached underneath the wheel body and the gear teeth (external gear) 423 which circle along the circumference of the wheel body will engage with the internal gear 11 (as shown in Fig. 2) or 21 (as shown in Fig. 3).

As indicated in the drawings, the user, while operating the present invention, should turn the knob 31 of the cleaning device 4 to make it revolve round the center of the seat 2 (as indicated by arrow A; the turntable 3 will revolve at the same time). At this moment, the external gear 423 of the cleaning device's wheel body 42 will engage with the box base' s D internal gear 11 or 21 and rotate round the pipe stem 411 of the knob 41 (as indicated by arrow B). The cleaning device 4, under the influence of rotation and revolution, is able to clean the entire compact disc 5 effectively in the radial direction with the cleaning element 422 attached.

As seen in Fig. 4 and Fig. 5, the external gear 423' of the wheel body 42 is located on the external wall of the socket 421 and the internal gear 11' of the box base is on the internal wall of the cover's 1 edge; this will reduce the radius of the wheel body' s socket, therefore, the rotating speed of the wheel body will be quicker, which means the cleaning time required can be shortened.

## Claims

1. A compact disc cleaner comprising:
a box base (D) including a cover (1) and a seat (2) pivoted to one another to be movable between open and closed positions, the box base having a series of internal gear teeth (11) thereon and the seat including means (22,23) for supporting a compact disc (5) within the box base;
a turntable (3) mounted on the cover (1) for rotation about an axis coincident with a centre of the seat (2); and
a cleaning device (4) mounted on the turntable (3) for rotation relative to the turntable (3) about an axis off-set from the axis of the turntable (3), the cleaning device (4) carrying a cleaning element (422) on its underside and having an external gear (423) that meshes with the internal gear of the box base, such that rotation of the turntable (3) about its axis causes the cleaning device (4) and the cleaning element (422) it carries to rotate about the axis of the cleaning device (4) to clean a compact disc (5) supported on the seat (2) in a radial direction;
**characterised in that** the turntable (3) is rotatably mounted within an aperture in the cover (1), a periphery of the turntable (3) engaging the edge (12) of the cover aperture, and **in that** the cleaning device (4) is mounted on the turntable (3) and extends through an aperture (33) within the periphery of the turntable (3) with a wheel body part (42) thereof carrying the cleaning element (422) projecting to the underside of the turntable (3) and a knob part 41) projecting above the turntable (3), such that the knob (41) can be used to rotate the turntable (3) about its axis.

2. A compact.disc cleaner as claimed in claim 1, wherein said internal gear (11) of said box base (D) is located on the internal wall of said cover (1).

3. A compact disc cleaner as claimed in claim 1, wherein said internal gear (11) of said box base (D) is located on the internal wall of said seat (2).

4. A compact disc cleaner as claimed in any one of claims 1 to 3, wherein said turntable (3) has several hooks (31) spaced beneath the outer rim and which forms grooves (32) for engaging the edge (12) of the cover aperture.

5. A compact disc cleaner as claimed in any one of the preceding claims, wherein said cleaning device (4) has a pipe stem (411) formed at the center of said knob (41), said pipe stem (411) having a pair of vertical slits and a pair of elastic hooks (412) at its bottom end, and wherein the center of said wheel body part (42) houses an upward socket (421) extending through said aperture (33), on said turntable (3) and engaging said hooks (412) of said pipe stem (411) of said knob (41) such that said wheel body part (42) is revolvable in said turntable.

6. A compact disc cleaner as claimed in claim 5, wherein said external gear (423') is on the external wall of said wheel body socket (421) and said internal gear (11') of said box base (D) is on the internal wall of said cover aperture.

## Patentansprüche

1. CD-Reiniger umfassend:
eine Gehäuse-Basis (D) mit einer Abdeckung (1) und einem Sitz (2), die zueinander geschwenkt werden können, um zwischen offenen und geschlossenen Positionen bewegt werden zu können, wobei die Gehäuse-Basis eine Reihe darauf ausgebildeter Innenzahnräder-Zähne (11) aufweist und der Sitz Mittel (22, 23) zur Auflage einer CD (5) innerhalb der Gehäuse-Basis einschließt;
einen Drehteller (3), der zum Drehen um eine mit einem Mittelpunkt des Sitzes (2) übereinstimmende Achse auf der Abdeckung (1) befestigt ist; und
eine Reinigungsvorrichtung (4), die auf dem Drehteller (3) befestigt ist, um relativ zum Drehteller (3) um eine von der Achse des Drehtellers (3) versetzte Achse gedreht zu werden, wobei die Reinigungsvorrichtung (4) auf ihrer Unterseite ein Reinigungselement (422) trägt und ein Außenzahnrad (423) aufweist, das in das Innenzahnrad der Gehäuse-Basis eingreift, so dass die Drehung des Drehtellers (3) um seine Achse dazu führt, dass die Reinigungsvorrichtung (4) und das von ihr getragene Reinigungselement (422) um die Achse der Reinigungsvorrichtung (4) gedreht werden, um eine CD (5), die auf dem Sitz (2) aufliegt, in einer radialen Richtung zu reinigen;
**dadurch gekennzeichnet, dass** der Drehteller (3) innerhalb einer Öffnung in der Abdeckung (1) drehbar befestigt ist, wobei ein Rand des Drehtellers (3) in die Kante (12) der Abdeckungsöffnung eingreift, und dadurch, dass die Reinigungsvorrichtung (4) auf dem Drehteller (3) montiert ist und sich durch eine Öffnung (33) innerhalb des Rands des Drehtellers (3) erstreckt, wobei ein Radkörperteil (42) davon, der das Reinigungselement (422) trägt, zur Unterseite des Drehtellers (3) vorragt und ein Griffteil (41) über den Drehteller (3) nach oben ragt, so dass der Griff (41) zum Drehen des Drehtellers (3) um seine Achse verwendet werden kann.

2. CD-Reiniger nach Anspruch 1, worin das Innenzahnrad (11) der Gehäuse-Basis (D) auf der Innenwand der Abdeckung (1) angeordnet ist.

3. CD-Reiniger nach Anspruch 1, worin das Innenzahnrad (11) der Gehäuse-Basis (D) auf der Innenwand des Sitzes (2) angeordnet ist.

4. CD-Reiniger nach einem der Ansprüche 1 bis 3, worin der Drehteller (3) mehrere Nasen (31) aufweist, die unterhalb des Außenrandes beabstandet angeordnet sind und Rillen (32) ausbilden, um in die Kante (12) der Abdeckungsöffnung einzugreifen.

5. CD-Reiniger nach einem der vorangegangenen Ansprüche, worin die Reinigungsvorrichtung (4) einen Rohrschaft (411) aufweist, der in der Mitte des Griffs (41) ausgebildet ist, wobei der Rohrschaft (411) ein Paar vertikaler Schlitze und ein Paar elastischer Nasen (412) an seinem unteren Ende besitzt, und worin die Mitte des Radkörperteils (42) auf dem Drehteller (3) eine nach oben gerichtete Buchse (421) aufweist, die sich durch die Öffnung (33) hindurch erstreckt und in die Nasen (412) des Rohrschafts (411) des Griffs (41) eingreift, so dass sich der Radkörperteil (42) im Drehteller drehen kann.

6. CD-Reiniger nach Anspruch 5, worin das Außenzahnrad (423') auf der Außenwand der Radkörperbuchse (421) und das Innenzahnrad (11') der Gehäuse-Basis (D) auf der Innenwand der Abdeckungsöffnung angeordnet ist.

## Revendications

1. Dispositif de nettoyage de disque compact comprenant :
une base de boîte (D) avec un couvercle (1) et un siège (2) apte à pivoter l'un relativement à l'autre pour être déplaçable entre des positions ouverte et fermée, la base de boîte comportant une série de dents de roue dentée internes (11) sur celle-ci, et le siège comportant un moyen (22, 23) pour supporter un compact disque (5) dans la base de boîte ;
un plateau (3) monté sur le couvercle (1) en vue d'une rotation autour d'un axe coïncidant avec un centre du siège (2) ; et
un dispositif de nettoyage (4) monté sur le plateau (3) en vue d'une rotation relativement au plateau (3) autour d'un axe décalé de l'axe du plateau (3), le dispositif de nettoyage (4) supportant un élément de nettoyage (422) sur son côté inférieur et présentant une roue dentée externe (423) qui engrène avec la roue dentée interne de la base de boîte, de telle sorte que la rotation du plateau (3) autour de son axe amène le dispositif de nettoyage (4) et l'élément de nettoyage (422) qu'il porte à tourner autour de l'axe du dispositif de nettoyage (4) pour nettoyer un compact disque (5) supporté sur le siège (2) dans une direction radiale ;
**caractérisé en ce que** le plateau (3) est installé d'une manière rotative dans une ouverture dans le couvercle (1), une périphérie du plateau (3) venant en prise avec le bord (12) de l'ouverture du couvercle, et **en ce que** le dispositif de nettoyage (4) est monté sur le plateau (3) et s'étend à travers une ouverture (33) dans la périphérie du plateau (3), une partie de corps de roue (42) de celui-ci supportant l'élément de nettoyage (422) faisant saillie vers le côté inférieur du plateau (3) et une partie formant bouton (41) faisant saillie au-dessus du plateau (3), de telle sorte que le bouton (41) peut être utilisé pour faire tourner le plateau (3) autour de son axe.

2. Dispositif de nettoyage de disque compact selon la revendication 1, où la roue dentée interne (11) de ladite base de boîte (D) se situe sur la paroi interne dudit couvercle (1).

3. Dispositif de nettoyage de disque compact selon la revendication 1, où ladite roue dentée interne (11) de ladite base de boîte (D) se situe sur la paroi interne dudit siège (2).

4. Dispositif de nettoyage de disque compact selon l'une des revendications 1 à 3, où ledit plateau (3) comporte plusieurs crochets (31) espacés en dessous du bord externe, et qui forme des rainures (32) pour venir en prise avec le bord (12) de l'ouverture de couvercle.

5. Dispositif de nettoyage de disque compact selon l'une des revendications précédentes, où ledit dispositif de nettoyage (4) comporte une tige tubulaire (411) formée au centre dudit bouton (41), ladite tige tubulaire (411) présentant deux fentes verticales et deux crochets élastiques (412) à son extrémité inférieure, et où le centre de ladite partie de corps de roue (42) loge une douille orientée vers le haut (421) s'étendant à travers ladite ouverture (33), sur ledit plateau (3) et venant en prise avec lesdits crochets (412) de ladite tige tubulaire (411) dudit bouton (41) de telle sorte que ladite partie de corps de roue (42) peut tourner dans ledit plateau.

6. Dispositif de nettoyage de disque compact selon la revendication 5, où ladite roue dentée externe (423') se situe sur la paroi externe de ladite douille de corps de roue (421) et ladite roue dentée (11') de ladite base de boîte (D) se situe sur la paroi interne de ladite ouverture de couvercle.
